# EUROPÄISCHE PATENTSCHRIFT

(11) **EP 1 425 146 B1**
(45) Veröffentlichungstag und Bekanntmachung des Hinweises auf die Patenterteilung: **22.09.2010**
(21) Anmeldenummer: 02747137.4
(22) Anmeldetag: 13.08.2002
(51) Int. Cl.: B29B 13/06, B29B 13/02, F26B 3/08, C08G 63/80, C08G 63/90, B01J 8/24, B01J 8/22

(54) **KONTINUIERLICHE THERMISCHE BEHANDLUNG VON SCHÜTTGÜTERN**
CONTINUOUS HEAT TREATMENT OF BULK MATERIAL
TRAITEMENT THERMIQUE CONTINU DE MATIERES EN VRAC

(30) Priorität: 11.09.2001 DE 10144747
(43) Veröffentlichungstag der Anmeldung: 09.06.2004
(73) Patentinhaber: Bühler AG, 9240 Uzwil (CH)
(72) Erfinder: DACHAUER, Christian, CH-8422 Pfungen ZH (CH); BORER, Camille, CH-8247 Flurlingen (CH); GEISSBÜHLER, Hans, CH-9524 Zuzwil (CH)
(74) Vertreter: Wilming, Martin
(86) Internationale Anmeldenummer: PCT/CH2002/000442
(87) Internationale Veröffentlichungsnummer: WO 2003/022544

(56) Entgegenhaltungen:
- EP-A- 0 481 799
- GB-A- 1 044 007
- GB-A- 1 449 372
- GB-A- 2 189 164
- US-A- 2 316 664
- US-A- 3 360 867
- US-A- 3 691 644
- US-A- 3 841 843
- US-A- 4 161 578
- US-A- 4 407 355
- US-A- 4 664 889
- US-A- 4 750 989
- US-A- 4 958 443
- US-A- 5 114 700
- US-A- 5 269 262
- US-A- 5 516 880
- US-A- 5 590 479

## Beschreibung

Die Erfindung bezieht sich auf eine Vorrichtung zum kontinulerlichen thermischen Behandeln von körnigen Schüttgütern, insbesondere zum Kristallisieren von Pölymergranulat, wie z.B. Polyethylenterephthalat (PET), mit einem Produkteintritt, der in eine erste am weitesten stromauf gelegene Kammer mündet, und einem Produktaustritt, der sich an eine am weitesten stromab gelegene Kammer anschliesst. Ausserdem bezieht sich die Erfindung auf ein Verfahren zum kontinuierlichen thermischen Behandeln eines körnigen Schüttgutes, insbesondere zum Kristallisieren von Polymergranulat, wie z.B. Polyethylenterephthalat (PET), unter Verwendung der erfindungegemässen Vorrichtung.

Eine derartige Vorrichtung ist z.B. aus der EP 0 712 703 A2 bekannt Sie besteht aus einem Gehäuse mit einem Eingang und einem Ausgang für thermisch zu behandelnde Kunststoff Flocken (Chips). Das Innere des Gehäuses ist durch mehrere Trennwände in eine erste grosse Kammer und mehrere kleinere Kammern unterteilt, wobei die Trennwand zwischen der ersten Kammer und den sich an sie anschliessenden Kammern höher ist als die Trennwände zwischen den jeweiligen kleineren Kammern. Sämtliche Kammern sind über einen Siebboden von unten her begasbar, um das flockige Produkt zu fluidisieren. Im Betrieb fliesst das fluidisierte Produkt ober die Oberkante der jeweiligen Trennwand von Kammer zu Kammer. Dabei können aufgrund der Sprudelbewegung in den jeweiligen Fluidisierungskammern ungewollte Rückvermischungen auftreten, indem Flocken aus einer Kammer in die von ihr stromauf gelegene Kammer zurückspringen bzw. zurückgeblasen werden. Hieraus ergeben sich dann unterschiedliche Verwellzeitspektren für unterschiedliche Flocken, was zwangsläufig zu Flocken mit voneinander abweichender Produktqualität führt.

Eine ähnliche wie die im vorherigen Absatz beschriebene Vorrichtung ist aus der US 5 516 880 bekannt. Sie besteht ebenfalls aus einem Gehäuse mit einem Eingang und einem Ausgang für thermisch zu behandelndes schüttgutartiges amorphes Polymermaterial, das zumindest an seiner Oberfläche kristallisiert werden soll. Das Innere des Gehauses ist durch mehrere Trennwände in eine erste grosse Kammer, die etwa die Hälfte des Gesamtvolumens aller Kammern einnimmt, und mehrere kleinere Kammern unterteilt. Sämtliche Kammern sind Ober einen Siebboden von unten her begasbar, um das Produkt zu fluidisieren. Die erste Kammer ist besonders gross, um in ihr eine besonders starke Fluidisierung zu erzeugen. Das heisst, in der ersten Kammer bewegen sich die Partikel im Durchschnitt mit viel höheren Geschwindigkeiten und füllen diese Kammer mit viel geringerer Partikeldichte als in den anschliessenden kleineren Kammern. Durch diese starke anfängliche Verwirbelung wird weitgehend vermindert dass die in die Vorrichtung eintretenden amorphen Polymerpartikel aneinanderkleben bevor sie kristallisieren. In den anschliessenden Kammern reicht eine geringere Verwirbelung aus, da die dann schon zumindest teilweise kristallisierten Polymerpartikel kaum noch zum Kleben neigen. Im Betrieb fliesst das fluidisierte Produkt über jeweils einen am seitlichen Rand der Trennwand angeordneten vertikalen Schlitz von Kammer zu Kammer: Auch hier können aufgrund der Sprudelbewegung des schüttgutartigen Polymermaterials undefinierte Bewegungen einzelner Polymerpartikel insbesondere in den oberen Bereiche der Wirbelschichten auftreten (aufsteigende und platzende Blasen), was in den jeweiligen Fluidisierungskammern zu ungewollten Rückvermischungen führt, indem Polymerpartikel Ober den oberen Bereich der seitlichen vertikalen Schlitze aus einer Kammer in die von ihr stromauf gelegene Kammer zurückspringen bzw. zurückgeblasen werden. Hieraus ergeben sich dann ebenfalls unterschiedliche Verweilzeitspektren für unterschiedliche Partikel, was wiederum zwangsläufig zu Polymerpartikeln mit voneinander abweichender Produktqualität führt.

Eine weitere Vorrichtung ähnlicher Bauart ist aus der US 2 316 664 bekannt. Sie ist für die Reduktion von Erzpartikeln, insbesondere Eisen- und Manganerz, mit reduzierenden Gasen bestimmt. Das reduzierende Gas wird dabei durch einen Siebboden in das Erzmaterial eingeblasen. Es nimmt somit einerseits an der Reaktion teil und wird andererseits zur Beeinflussung der Prozessbedingungen, insbesondere zur Fluidisierung der Erzpartikel und somit zur Erhöhung der freiliegenden Oberfläche verwendet. Da jedoch bel Erzpartikeln weder am Anfang noch im weiteren Verlauf der Reduktionsreaktion keine Verklebungsneigung der Partikel untereinander besteht, ist hier aber die erste Kammer nur geringfügig grösser als die weiteren Kammern ausgebildet. Sie nimmt lediglich etwa ein Viertel des gesamten Volumens aller Kammern ein.

Die DE 195 00 383 A1 offenbart eine Vorrichtung zum kontinulerlichen Kristallisieren von Polyestermaterial in Granulatform. Die thermische Behandlung findet in einem zy-Underförmigen Behandlungsraum statt, der ebenfalls von unten her über einen Siebboden begast wird, um das Granulat mit dem Behandlungsgas zu fluidisieren. Die Verwendung nur eines Behandlungsraums, in dem die Fluidisierung stattfindet, spart zwar Kosten und macht die Verwendung von Rührwerkzeugen und dgl. überflüssig, doch kann auch hier ein sehr enges Verweilzeitspektrum der Partikel und somit eine weitgehend einheitliche Produktqualität des Granulats noch nicht erzielt werden.

Die EP 0 379 684 A2 offenbart eine Vorrichtung und ein Verfahren zum kontinuierlichen Kristallisieren von Polyestermaterial in Granulatform. Die Vorrichtung besteht aus zwei separat angeordneten Fluidisierungskammern (Wirbelbettapparaten), wobei die erste Kammer eine sprudelnde Wirbelschicht mit Mischcharakteristik und die zweite Kammer ein Fliessbett mit Kolbenströmungscharakteristik ist. Durch diese Kombination zweier verschiedene Fluidisierungskammern wird zwar eine überraschend homogene Produktqualität erzielt, doch erfordert jeder der beiden separaten Wirbelbettapparate einen eigenen Kreislauf mit Kanälen, Ventilatoren, Wärmetauschern für das Begasungs- und Fluidisierungsgas sowie Zyklonabscheidern bzw. Filtern zur Abscheidung von Staub, der durch Abrieb von den Granulatpartikein entsteht.

Der vorliegenden Erfindung liegt daher die Aufgabe zugrunde, eine kostengünstige und einfach zu betreibende Vorrichtung und ein Verfahren der eingangs genannten Art bereitzustellen, bei der bzw. bei dem ein enges Verweilzeitspektrum der in der Vorrichtung fluidisierten und thermisch behandelten Granulatteilchen und somit eine homogene Produktqualität erzielt wird.

Diese Aufgabe wird bei der eingangs beschriebenen Vorrichtung erfindungsgemäss durch die Kombination der Merkmale im Anspruch 1 gelöst.

Erfindungsgemäss sind Produkfdurchtritte zwischen benachbarten Kammern bodenseitig zwischen dem Siebboden und einem unteren Endbereich der Trennwand zwischen den benachbarten Kammern angeordnet.

Diese einfache kompakte Bauweise ist besonders material- und platzsparend. Durch die aneinandergrenzenden Kammern werden Wärmeverluste bzw. der erforderliche

Bedarf an Wärmeisolation deutlich gesenkt und letztendlich ein energiesparender Betrieb ermöglicht. Ausserdem wird mit zunehmender Kammeranzahl das Verweilzeitspektrum für Granulat in der Vorrichtung immer enger. Besonders vorteilhaft ist auch die Tatsache, dass keine Zwischenförderung über eine Strecke zwischen den Kammern notwendig ist. Ausserdem reicht es aus, mit nur einem über den gesamten Siebboden eingeleiteten Begasungs-/Fluidisierungsstrom zu arbeiten. Insgesamt kann daher die erfindungsgemässe Vorrichtung kostengünstig bereitgestellt werden, und auch das erfindungsgemässe Verfahren und die Wartung der erfindungsgemässen Vorrichtung: erweisen sich als kostengünstig.

Besonders vorteilhaft ist dabei, dass die weiter oben erwähnten Sprudelbewegungen des schüttgutartigen Polymermaterials und undefinierten Bewegungen einzelner Polymerpartikel insbesondere in den oberen Bereichen der Wirbelschichten (aufsteigende und platzende Blasen), nicht zu ungewollten Rückvormischungen führen kann, da Polymerpartikel über keine oberen Bereiche aus einer Kammer in die von ihr stromauf gelegene Kammer z.B. durch platzende Blasen zurückspringen bzw. zurückgeblasen werden kann.

Ergänzend können die Produktdurchtritte auch zwischen benachbarten Kammern wandseitig zwischen einer Seitenwand und einem seltlichen Endbereich der Trennwand zwischen den benachbarten Kammern angeordnet sein. Überraschenderweise tritt bei dieser Anordnung der Produkidurchtritte nur wenig Rückvermischung zwischen den Kammern auf. Ausserdern erleichtert diese Anordnung das Entleeren der Vorrichtung nach dem Betrieb z.B. zu Reinigungs- oder Wartungszwecken oder bei einem Produktwechsel.

Zweckmässigerweise sind auch Produktdurchtritte in der Trennwand in etwa auf der Höhe des oberen Wirbetschichtendes angeordnet.

Bei einer besonders vorteilhaften Ausführung erstrecken sich die Produktdurchtritte über die gesamte Breite bzw. über die gesamte Höhe der Vorrichtung von einer Seitenwand zur anderen Seitenwand bzw. vom Siebboden bis zum oberen Wirbelschichtende, wobei die Produktdurchtritte vorzugsweise als horizontale bzw. vertikale Schlitze ausgebildet sind. Insbesondere erstrecken sich die schlitzartigen Produktdurchtritte jeweils entlang der gesamten Breite bzw. entlang der gesamten Höhe einer Trennwand. Vorzugsweise verwendet man nur horizontale Schlitze als Produktdurchtritte, um ein enges Vetwellteitspektrum zu erzielen.

Bei einer weiteren besonders vorteilhaften Ausführung sind an entlang der Produktförderrichtung aufeinanderfolgenden Trennwänden die Produktdurchtritte abwechselnd am Boden und auf der Höhe des oberen Wirbelschichtendes angeordnet. Auf diese Weise werden sämtliche Teilchen des Produktes auf einen achterbahnähnlichen Weg durch die Vorrichtung gezwungen, und für jede Kammer ist der Produkteintritt weitestmöglich vom Produktaustritt entfernt, so dass sämtliche Teilchen einen relativ langen Weg durch die jeweilige Kammer zurücklegen müssen. Befänden sich hingegen bei aufeinanderfolgenden Trennwänden die Produktdurchtritte jeweils am Boden, so könnte ein Teilchen unter Umständen direkt von Produktdurchtritt zu Produktdurchtritt durch diese Kammer wandern, ohne dass es sich in dieser Kammer länger aufhält. Dies wäre für das angestrebte schmale Verweilzeitspektrum in der Vorrichtung kontraproduktiv. Alternativ können die Produktdurchtritte auch an entlang der Produktförderrichtung aufeinanderfolgenden Trennwänden abwechselnd am linken wandseitigen Ende und am rechten wandseitigen Ende der Trennwand angeordnet sein. Analog werden die Teilchen hier auf einen slalomartigen Weg innerhalb der Vorrichtung gezwungen. Sowohl die Achterbahn-Konfiguration als auch die Slalom-Konfiguration wirken sich positiv auf die Vergleichmässigung der Produktverweilzeiten aus und tragen somit ergänzend zu der Mehrkammerigkeit der Vorrichtung zu einem schmalen Verweilzeitspektrum bei.

Zweckmässig ist es auch, wenn die Position der Produktdurchtritte verstellbar ist. Damit lassen sich produktspezifische Optimierungen durchführen, wie z.B. eine Einstellung der durchschnittlichen Verweilzeit der Granulatteilchen in der Vorrichtung.

In diesem Zusammenhang ist es auch besonders vorteilhaft, wenn die Querschnittsausdehnung der Produktdurchtritte verstellbar ist. Dies ermöglicht Optimierungen durch Anpassung an die jeweilige Korngrösse des Granulats.

Vorzugsweise stellt man eine Mindestabmessung, insbesondere die Schlitzbreite der Querschnittsausdehnung der Produktdurchtritte derart ein, dass sie im Bereich zwischen einer Granulat-Mindestabmessung und etwa 20 cm liegt. Eine besonders bevorzugte Mindestabmessung, insbesondere der Schlitzbreite der Querschnittsausdehnung der Produktdurchtritte liegt im Bereich zwischen dem 2-fachen einer Granulat-Mindestabmessung und etwa dem 10-fachen der Granulat-Mindestabmessung. Auch dies trägt dazu bei, eine direkte Durchströmung einer Kammer für ein Granulatteilchen vom Eintritt in die Kammer zum Austritt aus der Kammer unwahrscheinlicher zu machen. Somit werden zumindest kurze Verweilzeiten so gut wie unmöglich gemacht. Dies ist besonders bei der Kristallisation von Polyestern wie PET vorteilhaft und sinnvoll, da eine zu kurze Verweilzeit eines Polyesterpellets zu einer unzulänglichen Kristallisation führt, woraus sich zum Kleben neigende Pellets ergeben. Eine etwas überhöhte Verweilzeit wirkt sich dagegen bei der Kristallisation von Polyestern nicht negativ auf die Produkthomogenität aus, da die zeitabhängige Zunahme des Kristallisationsgrades anfänglich steil ansteigt und dann schnell in einen Sättigungsbereich übergeht. Ein weiterer Vorteil besteht darin, dass auch die Wahrscheinlichkeit einer Rückvermischung minimal wird, wodurch zusätzlich die thermische Effizienz der Vorrichtung gesteigert wird und jede Kammer eine definierte Temperatur beibehält.

Ein weitere bevorzugte Ausführung zeichnet sich dadurch aus, dass die bodenseitig oder die in etwa auf der Höhe des oberen Wirbelschichtendes in der Trennwand bzw. die wandseitig angeordneten Produktdurchtritte jeweils ein zum Boden bzw. zur jeweiligen Seitenwand im wesentlichen paralleles und zur Trennwand im wesentlichen jeweils senkrecht angeordnetes Blech aufweisen, das an der Kante des jeweiligen Produktdurchtritts befestigt ist und sich durch den Produktdurchtritt hindurch beiderseits dieser Trennwand jeweils in die beiden benachbarten Kammern erstreckt. Auf diese Weise entsteht ein Produktdurchtritt, der jeweils als eine Art Tunnel zwischen diesem Blech und dem Boden bzw. der Seitenwand ausgebildet ist. Ein Teilchen, das entgegen dem vorwiegenden Strom des fluidisierten Produktes in diesen Tunnel gerät wird somit aller Wahrscheinlichkeit nach zwischen den Tunnelwänden hin und her reflektiert und hat somit eine längere Verweilzeit im Produktdurchtritt, wodurch die Wahrscheinlichkeit stark erhöht wird, dass es früher oder später durch Stösse mit anderen Teilchen des fluidisierten Produktstroms mitgerissen wird. Somit wird durch diese Tunnel-Version ebenfalls eine Rückvermischung mit den genannten negativen Folgen erschwert und letztendlich praktisch unmöglich gemacht.

Vorteilhafterweise sind im Bereich der bodenseitigen Produktdurchtritte und im wesentlichen gegenüber von dem Blech Einblasbereiche im Siebboden angeordnet, die ein Einblasen von Fluidisierungsgas in die Kammer mit einer Geschwindigkeit ermöglicht, die sowohl eine Geschwindigkeitskomponente senkrecht zum Einblasbereich als auch eine Geschwindigkeitskomponente parallel zum Einblasbereich in Richtung des fluidisierten Granulatstroms ermöglicht. Hierfür wird vorzugsweise sogenanntes Konidur-Blech verwendet, bei dem die Öffnungen des Siebbodens nicht durch vollständiges Ausstanzen und Entfernen von Material gebildet werden, sondern durch lediglich teilweises Ausstanzen und anschliessendes Umbiegen des teilweise ausgestanzten Materialteils gebildet werden. Somit kann im Bereich des Produktdurchtritts und insbesondere bei der Tunnel-Version im Bereich des Tunnels neben der senkrecht nach oben gerichteten Fluidisierungskomponente eine waagrechte Transportkomponente auf das Produkt übertragen werden, wodurch ebenfalls die Rückvermischung erschwert wird.

Im Bedarfsfalle ist es auch möglich, mindestens die erste Kammer über ihren Siebboden mit einem ihr zugeordneten Zufuhrkanal für Fluidisierungsgas zu verbinden, der von einem gemeinsamen Zufuhrkanal für die restlichen Kammern getrennt ist. Dies kann z.B. durch einen gemeinsamen Luftkreislauf erzielt werden, der vor dem Siebboden der ersten Kammer und dem gemeinsamen Siebboden der restlichen Kammern eine Verzweigung aufweist, wobei in jedem als Zuleitung zu dem jeweiligen Siebboden und als Abführleitung von den jeweiligen Kammern der Vorrichtung dienenden Zweig eine einstellbare Klappe vorgesehen ist, mittels der die Gasverteilung und somit auch die Gasgeschwindigkeit für die Fluidisierung der jeweiligen Kammern eingestellt werden kann. Dadurch wird ermöglicht, die erste Kammer unter anderen Bedingungen als die restlichen Kammern zu begasen und zu fluidisieren. So kann z.B. bei der Kristallisation von Polyestern in der ersten Kammer mit einer höheren Gasgeschwindigkeit durch den Siebboden hindurch fluidisiert werden als bei den restlichen Kammern. Der Vorteil besteht dann darin, dass bei dem noch nicht oder kaum kristallisierten Produkt in der ersten Kammer, das noch viel stärker zum Kleben neigt als das sich schon in den anschliessenden restlichen Kammern befindliche Produkt, durch die höhere Gasgeschwindigkeit eine stärkere Fluidisierung und somit Vorbeugung gegen Agglomeratbildung bewirkt wird.

In den meisten Fällen reicht es jedoch aus, wenn sämtliche Kammern über ihren jeweiligen Siebboden einem gemeinsamen Zufuhrkanal für Fluidisierungsgas zugeordnet sind. Dadurch werden Materialkosten an der Vorrichtung gespart und der Betrieb wird vereinfacht.

Vorzugsweise ist am Produktaustritt einen Prallauflöser vorgesehen, in den der Produktaustritt mündet. Durch diesen Prallauflöser werden schliesslich Agglomerate aufgelöst, die sich trotz aller anderweitigen Vorkehrungen dennoch gebildet haben.

Die Siebböden aller Kammern können in einer Ebene angeordnet sein. Alternativ kann die Vorrichtung aus entlang des fluidisierten Granulatstroms aneinandergereihten Kammern mit zueinander versetzten Höhen bestehen.

Vorzugsweise ist die erste Kammer durch eine sie zylindrisch umgebende Wand in ihrem Grundriss definiert, und die restlichen Kammern schliessen sich um die erste Kammer radial nach aussen hin mit zylindrischen Wänden konzentrisch an. Diese Bauweise ist besonders platz- und materialsparend, und die Wärmeverluste sind ebenfalls gering. Alternativ kann die erste Kammer durch ein Paar konzentrischer zylindrischer Wände in ihrem Grundriss definiert sein, wobei sich die restlichen Kammern innerhalb der inneren zylindrischen Wand der ersten Kammer radial nach innen hin mit zylindrischen Wänden konzentrisch anschliessen.

Anstelle des zylindrischen Grundrisses kann die erste Kammer in ihrem Grundriss auch rechteckförmig ausgebildet sein und sich die restlichen Kammern an die erste Kammer nach aussen hin anschliessen. Neben den schon genannten Vorteilen bei der zylindrischen Geometrie kommt bei der Rechteckform noch hinzu, dass sie sich besonders leicht bauen lässt. Alternativ kann auch hier die erste Kammer in ihrem Grundriss rechteckförmig sein, wobei sich die restlichen Kammern innerhalb der ersten Kammer nach innen hin z.B. ineinander verschachtelt mit ebenfalls jeweils rechteckförmigem Grundriss konzentrisch anschliessen.

Bei allen bisher genannten Ausführungen ist es besonders vorteilhaft, wenn zumindest die restlichen Kammern jeweils derart ausgelegt sind, dass in ihnen das Verhältnis zwischen der Schichthöhe des fluidisierten Granulats und der kleinsten Grundriss-Kammerabmessung im Bereich von 0,5 bis 2 liegt. Dieser bevorzugte Richtwert für das genannte Verhältnis gewährleistet, dass im Innern des fluidisierten Produkts keine übermässige Blasenbildung stattfinden kann. Ist die Schichthöhe des fluidisierten Produkts viel grösser als das 2-fache einer kleinsten Grundriss-Kammerabmessung, so können sich aus vielen kleinen Blasen während des Aufsteigens einige wenige oder gar nur eine grosse Blase bilden, die sich aufgrund des nach oben hin abnehmenden Schweredrucks im fluidisierten Produkt nach oben bewegen und dann beim Erreichen der Wirbelschichtoberfläche Stösse erzeugen und/oder dazu führen, dass die Granulatteilchen herumgeschleudert werden. Ist andererseits der Boden nur dünn mit Produkt bedeckt, ist keine wirtschaftliche Fluidisierung möglich.

Die am weitesten stromauf angeordnete erste Kamme nimmt einen Grossteil des Gesamtvolumens aller Kammern ein, und zwar insbesondere etwa die Hälfte des Gesamtvolumens aller Kammern. Zweckmässigerweise nimmt dabei auch die Siebbodenfläche der ersten Kammer einen Grossteil der gesamten Sieb bodenfläche aller Kammern ein, und zwar wiederum etwa die Hälfte der gesamten Siebbodenfläche aller Kammern. Dies ist besonders vorteilhaft bei der Kristallisation von Polyestern. Dadurch kann in der ersten Kammer in einem ersten Kristallisationsschritt bei einem Grossteil aller Teilchen eine weitgehende Kristallisation erzielt werden. Da in dieser ersten Phase noch vereinzelte Teilchen klebrig sind, ist es besonders wichtig, in der ersten Kammer eine grossvolumige Fluidisierung mit geringerer Teilchendichte als in den anschliessenden restlichen Kammern zu erzeugen. Dann ist auch die Wahrscheinlichkeit des Aufeinandertreffens zweier klebriger Teilchen und damit eine Agglomeratbildung viel geringer.

Zweckmässigerweise ist am stromabseitigen Ende der letzten Kammer der Produktaustritt in einer Wand fensterartig ausgebildet mit einem Schieber versehen, durch den der untere Rand des Fensters verstellt werden kann. Alternativ kann auch am stromabseitigen Ende der letzten Kammer der Produktaustritt als eine Art schwenkbares Wehr ausgebildet sein, dessen Höhe durch Schwenken des Wehres verstellt werden kann.

Um zu verhindern, dass zusammen mit dem im Deckenbereich der Vorrichtung abgezogenen Fluidisierungsgas vereinzelte Granulatteilchen aus der Vorrichtung entweichen, z.B. wenn grössere Blasen die Wirbelschichtoberfläche erreichen, ist über der Wirbelschicht vor dem Abzug ein sogenannter Zickzack-Abscheider angeordnet, der Gas durchlässt und Granulatteilchen aufhält und wieder zurück in das Wirbelbett leitet.

Erfindungsgemäss wird das Granulat durch die mehreren aneinandergereihten Fluidisierungskammern geführt, die jeweils einen Siebboden aufweisen, durch den in die jeweilige Kammer von unten her ein Fluidisierungsgas (z.B. reiner Stickstoff oder Luft) zum Fluidisieren des Granulats eingeblasen und im Deckenbereich der Vorrichtung abgezogen wird, wobei die absolute Füllhöhe des fluidisierten Granulates in der ersten Kammer mindestens so hoch wie die absolute Füllhöhe der sich stromab anschliessenden restlichen Kammern ist.

Zweckmässigerweise wird in sämtliche Kammern Fluidisierungsgas mit einer einheitlichen ersten Behandlungstemperatur eingeblasen, wobei das Fluidisierungsgas vorzugsweise auch als Wärmequelle zum Aufheizen des fluidisierten Granulats verwendet wird. Diese einheitliche erste Behandlungstemperatur beträgt im Falle der Kristallisation von PET etwa 180°C. Das noch vorwiegend amorphe Ausgangsprodukt tritt in Form von Pellets mit einer Temperatur von etwa 20°C und bei dieser niedrigen Temperatur nicht klebend in die erste Kammer ein. In der ersten Kammer findet noch keine vollständige Wärmeübertragung auf das PET-Granulat statt, was wiederum vorteilhaft ist, da im amorphen oder nur geringfügig kristallisierten Zustand die Klebeneigung bei Erwärmung noch sehr stark ist. In den anschliessenden Kammern findet jeweils ein weiterer Temperaturanstieg des PET-Granulats statt, da in diesen Kammern die Ausgangstemperatur schon jeweils höher als in der vorhergehenden Kammer ist und in jede Kammer Gas derselben Behandlungstemperatur eingeblasen wird. Somit lässt sich ein optimaler Kristallisationsprozess für PET einstellen, bei dem von Kammer zu Kammer die Temperatur des PET-Granulats in Richtung zur optimalen Kristallisationstemperatur zunimmt, während gleichzeitig der Kristallisationsgrad des PET von Kammer zu Kammer erhöht und damit die Klebeneigung selbst bei zunehmender Temperatur gering gehalten wird.

Bei Bedarf kann das Fluidisierungsgas zumindest teilweise ein mit dem fluidisierten Granulat reagierendes Gas enthalten. Dies kann z.B. bei der Trocknung von Lebensmitteln ein desinfizierendes oder aromatisierendes Gas sein.

Zweckmässigerweise wird in mindestens eine der restlichen Kammern ein Fluidisierungsgas mit einer zweiten Behandlungstemperatur eingeblasen, das vorzugsweise als Wärmesenke zum Kühlen des fluidisierten Granulats verwendet wird.

Vorzugsweise wird in sämtliche Kammern Fluidisierungsgas mit gleichem Überdruck und gleicher Gasgeschwindigkeit eingeblasen. Bei Bedarf kann jedoch in die erste Kammer Fluidisierungsgas mit höherem Druck und/oder höherer Gasgeschwindigkeit als in die restlichen Kammern eingeblasen werden. Die höhere Gasgeschwindigkeit führt zu einer stärkeren Fluidisierung, d.h. Ausdehnung der Wirbelschicht, während der höhere Gasdruck die Zufuhr von mehr Wärme über das Fluidisierungsgas ermöglicht.

Weitere Vorteile, Merkmale und Anwendungsmöglichkeiten ergeben sich aus der nun folgenden Beschreibung eines bevorzugten Ausführungsbeispiels anhand der Zeichnung, wobei:
- Fig. 1: eine Schnittansicht entlang einer vertikalen Ebene eines ersten Ausführungsbeispiels der Erfindung ist;
- Fig. 2: eine Schnittansicht entlang einer vertikalen Ebene eines zweiten Ausführungsbeispiels der Erfindung ist;
- Fig. 3a und 3b: eine Schnittansicht entlang einer vertikalen Ebene bzw. eine Schnittansicht entlang einer horizontalen Ebene eines dritten Aus- führungsbeispiels der Erfindung ist;
- Fig. 4: ein Diagramm ist, das die Abhängigkeit des Verweilzeitspektrums von Granulatteilchen in der erfindungsgemässen Vorrichtung in Ab- hängigkeit von der Anzahl der Kammern der Vorrichtung zeigt;
- Fig. 5a und Fig. 5b: eine einstufige Wirbelschicht bzw. eine 5-stufige Wirbelschicht schematisch zeigen;
- Fig. 5c: den örtlichen Temperaturverlauf des Produktes der Wirbelschicht von Fig. 5a bzw. der Wirbelschicht von Fig. 5b zeigt;
- Fig. 6a: eine erste besondere Ausführung der Produktdurchtritte zwischen den Kammern zeigt; und
- Fig. 6b: eine zweite besondere Ausführung der Produktdurchtritte zwischen den Kammern in vergrösserter Darstellung zeigt.

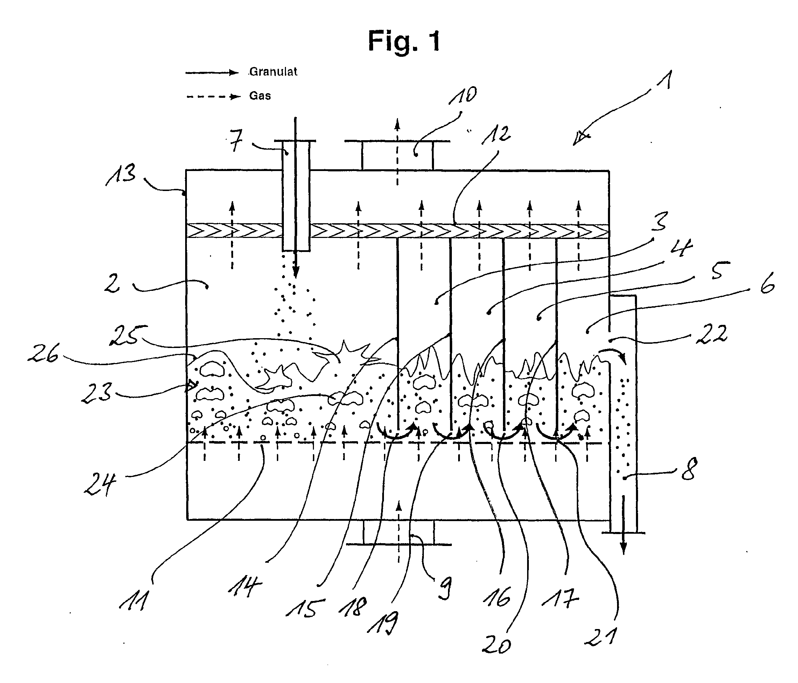

Fig.1 zeigt schematisch eine Vertikal-Schnittansicht eines ersten Ausführungsbeispiels der erfindungsgemässen Vorrichtung 1. Die erfindungsgemässe Vorrichtung 1 bildet einen Mehrkasten-Kristallisator mit einem Gehäuse 13, in dessen Innern mehrere Kammern 2, 3, 4, 5 und 6 voneinander durch Trennwände 14, 15, 16 bzw. 17 getrennt sind. Der Boden der Kammern wird durch einen Siebboden 11 gebildet, durch den von unten her ein Fluidisierungsgas eingeblasen werden kann. Nach oben werden die Kammern durch einen Zickzack-Abscheider 12 begrenzt, der die Kammerdecke bildet. Die vordere und die hintere Begrenzung der Kammern 2, 3, 4, 5 und 6 verlaufen parallel oberhalb bzw. unterhalb der Zeichenebene und sind daher in der Schnittansicht nicht gezeigt.

Das zu fluidisierende und thermisch zu behandelnde Produkt, bei dem es sich insbesondere um Polyethylenterephthalat (PET) handelt, wird über einen Produkteintritt 7 von oben her in die Vorrichtung 1 eingeleitet und verlässt die Vorrichtung 1 über einen Produktaustritt 8. Fluidisierungsgas wird über einen Gaseintritt 9 unterhalb des Siebbodens 11 in die Vorrichtung 1 eingeblasen und wird, nachdem sie durch den Zickzack-Abscheider 12 hindurchgetreten ist, über einen Gasaustritt 10 im Deckenbereich der Vorrichtung 1 abgezogen. Das in die Vorrichtung 1 eintretende Granulat gelangt zunächst in die erste Kammer 2, die einen Grossteil des gesamten Kammervolumens einnimmt, und wird durch das über den Siebboden 11 eintretende Fluidisierungsgas fluidisiert, wodurch eine Wirbelschicht 23 aus Granulat und Fluidisierungsgas entsteht. Die Wirbelschicht verhält sich wie ein Fluid, das heisst innerhalb der Wirbelschicht bildet sich ein Schweredruck aus, und die Wirbelschicht fliesst über die Produktdurchtritte 18, 19, 20 und 21 zwischen einem untern Endbereich der Trennwände 14, 15, 16 bzw. 17 und dem Siebboden 11 von der ersten Kammer 2 in die sich anschliessenden Kammern 3, 4, 5 bzw. 6. Am Ende der letzen Kammer 6 befindet sich in der Endwand ein Fenster 22 in einer gewissen Höhe über dem Siebboden 11 und definiert über diese Höhe die Höhe sämtlicher Wirbelschichten 23 in allen Kammern 2, 3, 4, 5 und 6. Die Wirbelschicht 23 ist in Fig.1 schematisch dargestellt.

Innerhalb der Wirbelschicht 23 können sich Blasen ausbilden, die innerhalb der Wirbelschicht nach oben steigen und sich zu grösseren Blasen 24 vereinigen können die, sobald sie an die Wirbelschichtoberfläche 26 gelangen, aufplatzen und das Granulat innerhalb der Kammer umherschleudern können. Dies ist im Bereich der Bezugsziffer 25 schematisch dargestellt.

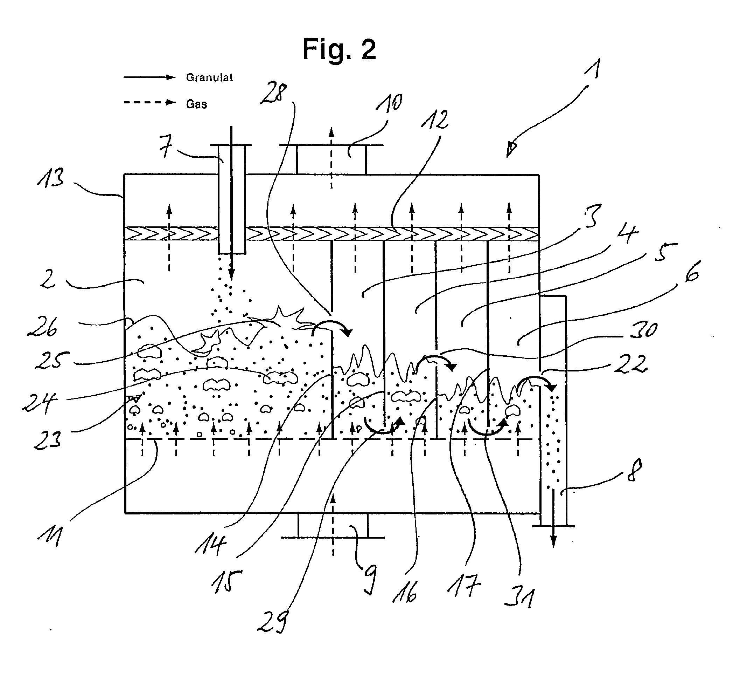

Fig. 2 zeigt eine Vertikal-Schnittansicht eines zweiten Ausführungsbeispiels der erfindungsgemässen Vorrichtung 1: Das zweite Ausführungsbeispiel unterscheidet sich von dem ersten Ausführungsbeispiel dadurch, dass bei ihm in den aufeinanderfolgenden Trennwänden 14, 15, 16 und 17 zwischen den Kammern 2, 3, 4, 5 und 6 die Produktdurchtritte 28, 29, 30 bzw. 31 abwechselnd auf einer bestimmten Höhe oberhalb des Siebbodens 11 in den Trennwänden 14 und 15 und unmittelbar am Siebboden 11 in den Trennwänden 15 und 17 angeordnet sind. Dadurch werden die Granulatteilchen auf ihrem Weg durch die Kammern 2, 3, 4, 5 und 6 auf einem abwechseln oben und unten verlaufenden Weg ähnlich wie bei einer Achterbahn transportiert. Dies hat den Vorteil, dass in jeder Kammer der stromaufseitige Produktdurchtritt und der stromabseitige Produktdurchtritt weitestmöglich voneinander entfernt sind. Dadurch werden sämtliche Granulatteilchen über einen möglichst langen Weg durch jede der Kammern 3, 4, 5 und 6 gezwungen, wodurch zumindest erreicht wird, dass möglichst wenige Granulatteilchen eine kurze Verweilzeit besitzen.

Dies ist insbesondere bei der Kristallisation von Polyestern vorteilhaft, da deren Klebrigkeit nach einer Mindestverweilzeit in einem Kristallisator weitgehend überwunden wird, während zu lange Verweilzeiten keine Beeinträchtigungen der Produktqualität bewirken. Durch die kaskadenartige Anordnung der Produktdurchtritte 28 und 30 wird das Volumen der Wirbelschichten von der ersten Kammer 2 über die zweite und dritte Kammer 3, 4 zu der vierten und fünften Kammer 5, 6 immer kleiner. Sämtliche in Fig. 1 und Fig. 2 identische Bezugszeichen beziehen sich auf die gleichen bzw. entsprechenden Elemente der Vorrichtung 1.

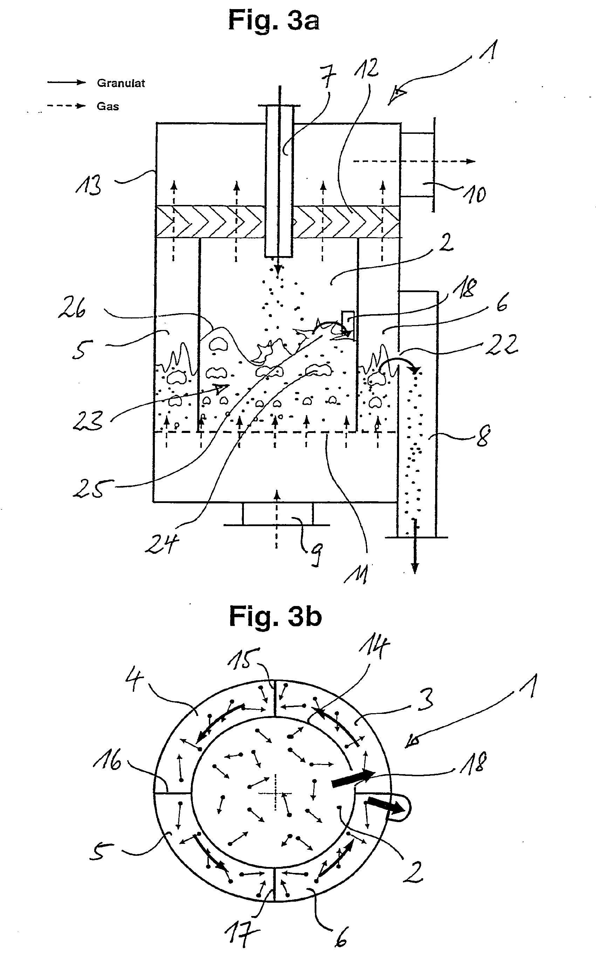

Fig. 3a zeigt eine Vertikal-Schnittansicht eines dritten Ausführungsbeispiels der erfindungsgemässen Vorrichtung 1, während Fig. 3b eine Horizontal-Schnittansicht dieses dritten Ausführungsbeispiels zeigt. Wie man in Fig.3b am besten sieht, besteht die Vorrichtung 1 aus einer zentral angeordneten zylindrischen Kammer 2, die wiederum einen Grossteil des gesamten Kammervolumens der Vorrichtung 1 einnimmt, sowie aus peripheren Kammern 3, 4, 5 und 6, die sich radial an die zentrale Kammer 2 anschliessen und diese entlang ihres gesamten Umfangs umgeben. Die zentrale Kammer 2 ist durch eine Trennwand 14 von den sie radial umgebenden Kammern 3, 4, 5 und 6 getrennt, die wiederum durch die Gehäusewand 13 nach aussen begrenzt sind. Zwischen den Kammern 3, 4, 5 und 6 befindet sich jeweils eine Trennwand 15, 16 bzw. 17, so dass wiederum vier gleich grosse Kammern 3, 4, 5 und 6 gebildet werden. In einer bestimmten Höhe über dem Siebboden (Fig. 3a) befindet sich ein Produktdurchtritt 18, der die Verbindung zwischen der ersten Kammer 2 und der zweiten Kammer 3 bildet. Die Produktdurchtritte zwischen den Kammern 3, 4, 5 und 6 sind nicht dargestellt. Sie entsprechen jedoch den Produktdurchtritten 18, 19, 20 und 21 der Fig. 1 bzw. den Produktdurchtritten 28, 29, 30 und 31 der Fig. 2.

Sowohl in Fig. 1 als auch in Fig. 2 und in Fig. 3b kann das Fenster 22 in seiner Höhe und/oder Querschnittsabmessung verstellbar sein. Durch die Verstellbarkeit der Höhe wird die Höhe der Wirbelschicht 23 bestimmt, während durch die Verstellbarkeit der Querschnittsabmessung der Durchsatz durch die Vorrichtung 1 eingestellt werden kann. Sowohl in den Ausführungsbeispielen 1 und 2 mit rechteckförmiger Geometrie als auch in dem Ausführungsbeispiel 3 mit zylindrischer Geometrie können die Produktdurchtritte jeweils nur am Boden angeordnet sein (vergl. Produktdurchtritte 18, 19, 20 und 21 in Fig.1), oder sie können abwechselnd oben und unten angeordnet sein, wodurch eine Achterbahn-Anordnung entsteht (vergl. Produktdurchtritte 28, 29, 30 und 31 in Fig.2), oder sie können abwechselnd am linken oder rechten Endbereich der aufeinanderfolgenden Trennwände 14, 15, 16 und 17 im Bereich der Seitenwand angeordnet sein, so dass eine Slalom-Anordnung (nicht gezeigt) entsteht.

In den oben beschriebenen Figuren 1, 2 sowie 3a und 3b wurden drei verschiedene Ausführungsbeispiele der erfindungsgemässen Vorrichtung 1 beschrieben. In allen drei Fällen handelt es sich um jeweils unterschiedliche Konstruktionsvarianten einer 5-stufigen Wirbelschicht 23. Sie unterscheiden sich in der Anordnung der Kammern 2, 3, 4, 5, 6 und der Produktdurchtritte 18, 19, 20, 21; 28, 29, 30, 31 sowie der Produktöffnungen 22. Die 5-stufige Wirbelschicht 23 besteht jeweils aus einer grossen Kammer 2, der (Haupt-)Kristallisationskammer, und vier nachfolgenden kleineren Kammern 3, 4, 5, 6 gleicher Grösse, welche für die Homogenisierung des Produktes zuständig sind. Die Kammern 3, 4, 5, 6 sind entweder aneinandergereiht oder konzentrisch um die grössere Kammer 2 angeordnet. Die Wirbelschichtapparate 1 werden durch eine einzige Gaszufuhr gespeist. Das Gas verteilt sich aufgrund des Druckabfalls über dem Siebboden 11 und der Wirbelschicht 23 auf die einzelnen Kammern 2, 3, 4, 5, 6 auf. Die Produktdurchtritte 18, 19, 20, 21; 28, 29, 30, 31 sind unten, oben oder abwechselnd unten/oben angeordnet. In dem Ausführungsbeispiel von Fig. 1 stellt sich aufgrund der unten liegenden Produktdurchtritte 18, 19, 20, 21 eine Wirbelschicht 23 einheitlicher Höhe in den Kammern 2, 3, 4, 5, 6 ein. Diese lässt sich durch die Höhe der Produktaustrittfensters 22 in der letzten Kammer 6 regulieren. In dem Ausführungsbeispiel von Fig. 2 ist die Schichthöhe der Wirbelschicht 23 jeweils in der Kammer 2, den Kammern 3 und 4 sowie den Kammern 5 und 6 aufgrund der abwechselnd unten und oben liegenden Produktdurchtritte 28, 29, 30, 31 unabhängig voneinander einstellbar, indem die Höhenposition der oben liegenden Produktdurchtritte 28, 30 eingestellt wird.

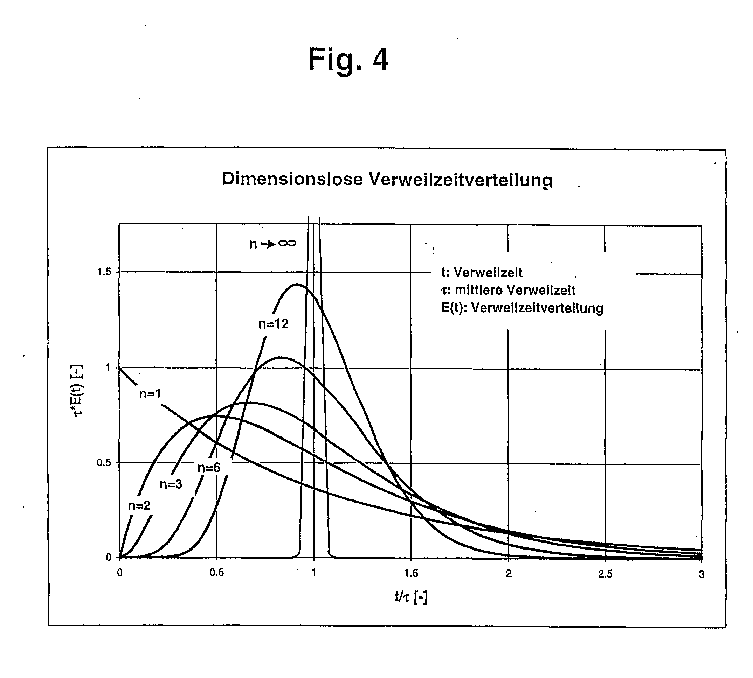

In Fig. 4 ist das dimensionslose Verweilzeitspektrum n hintereinander geschalteter ideal durchmischter fluidisierter Kammern bzw. Rührkessel (Rührkesselkaskade) abgebildet. Als Grundlage für die Berechnung wurde angenommen, dass die mittlere Verweilzeit des Produktes in den einzelnen Wirbelkammern bzw. Rührkesseln gleich gross ist. Man erkennt, dass mit zunehmender Anzahl Wirbelkammern bzw. Rührkessel das Verweilzeitspektrum enger und somit das thermisch behandelte Produkt am Austritt des Apparates homogener wird. Bei unendlich vielen Wirbelkammern bzw. Rührkesseln erhält man eine reine Pfropfenströmung. Dann sind alle Teilchen den in den einzelnen Kammern bzw. Kesseln stattfindenden Wirkungen gleich lange ausgesetzt, und man erhält ein Erzeugnis sehr einheitlicher Qualität. In der Praxis genügt es oft, den Apparat in wenige Kammern zu unterteilen, um eine verbesserte und genügend hohe Qualität des Produktes zu erreichen.

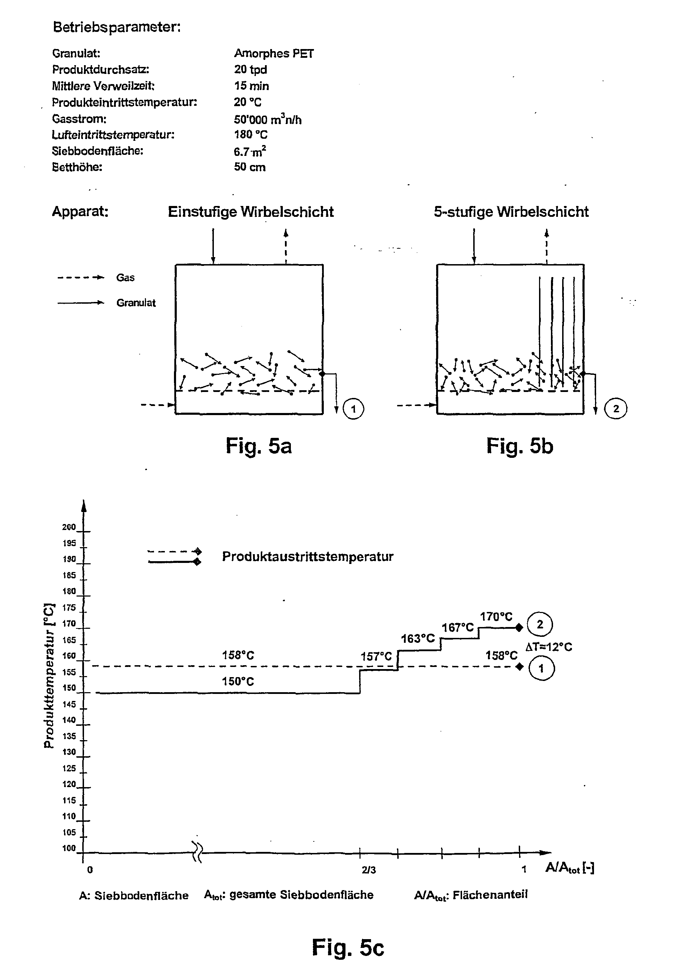

Fig. 5a und 5b zeigen schematisch eine einstufige bzw. eine 5-stufige Wirbelschicht. Fig. 5c zeigt als Ergebnis eines Berechnungsbeispiels den örtlichen Verlauf der Produkttemperatur sowohl dieser einstufigen als auch dieser 5-stufigen Wirbelschicht. In dem Beispiel wurde der örtliche Produkttemperaturverlauf (Temperaturverteilung) der 5-stufigen Wirbelschicht mit dem örtlichen Produkttemperaturverlauf (Temperaturverteilung) der einstufigen Wirbelschicht verglichen. Der Produktdurchsatz und die Betriebsparameter repräsentieren die heutzutage gebauten Industrieanlagen. Es muss an dieser Stelle vermerkt werden, dass die freiwerdende Kristallisationswärme in der Wärmebilanz der ersten Kammer berücksichtigt wurde (hier findet auch ein Grossteil der exothermen Kristallisationsreaktion statt). Man erkennt, dass durch die Einteilung der Wirbelschicht in mehrere Stufen/Kammern die Effizienz des Wärmeaustausches zwischen Gas und Granulat deutlich verbessert werden konnte, und dies bei gleichzeitiger Verbesserung der Qualität und Homogenität des Endproduktes. Die thermische Effizienz (als Verhältnis [Produkttemperatur am Produktaustritt- Produkttemperatur am Produkteintritt] / [Behandlungsgastemperatur am Gaseintritt - Produkttemperatur am Produkteintritt] definiert und gemessen) konnte für dieses Beispiel um rund 7.5% gesteigert werden. Durch die höhere Produkttemperatur nach der Kristallisation kann in einem in der Regel nachfolgenden Prozessschritt zur Festphasen-Nachkondensation (SSP) an der dort nötigen Apparatgrösse eingespart werden.

Fazit: Die mehrstufige Wirbelschicht der vorliegenden Erfindung zeichnet sich sowohl durch ein verbessertes, d.h. engeres Verweilzeitspektrum des Produktes in dieser mehrstufigen Wirbelschicht als auch durch eine verbesserte, d.h. gesteigerte thermische Effizienz der thermischen Behandlung des Produktes aus.

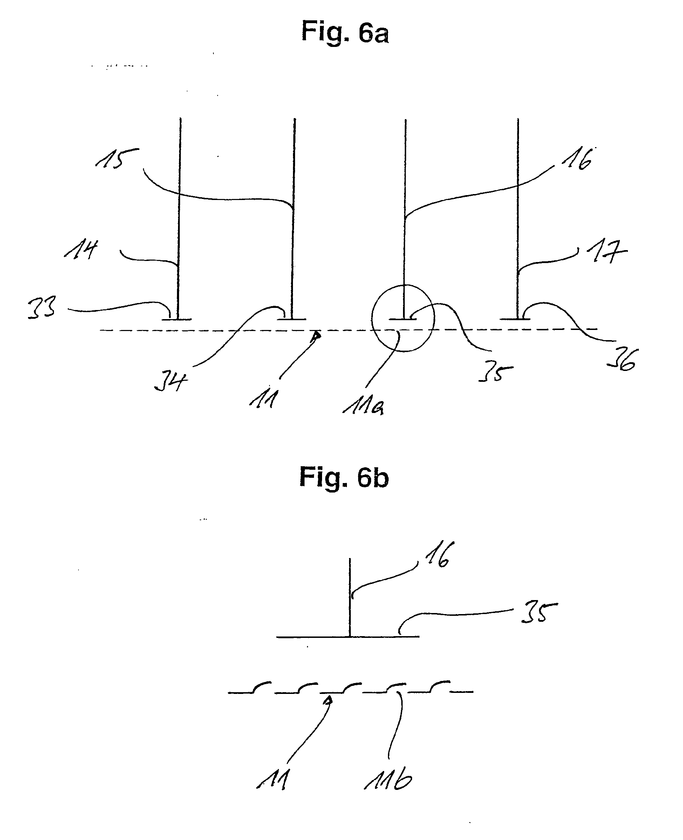

Fig. 6a und 6b zeigen eine besonders vorteilhafte erste Ausführung der Produktdurchtritte zwischen den Kammern der erfindungsgemässen Vorrichtung.

Fig. 6a entspricht einem Ausschnitt von Fig. 1, der die Trennwände 14, 15, 16 und 17 in ihrem unteren Bereich in der Nähe des Siebbodens 11 zeigt. Der Siebboden 11 weist Löcher 11a auf, die durch Ausstanzen von Material und Entfernen von Material gebildet wurden. Im Gegensatz zu Fig. 1 ist jedoch bei dieser Ausführung das jeweils untere Ende der Trennwände 14, 15, 16 und 17 mit einem Leitblech 33, 34, 35 bzw. 36 versehen, das sich beiderseits der jeweiligen Trennwand und senkrecht zu ihr in die Kammern beiderseits der jeweiligen Trennwand erstreckt. Durch die Leitbleche 33, 34, 35, 36 wird eine Rückvermischung, d.h. eine Zurückwandern von Granulatteilchen gegen den Granulatstrom erschwert. Eine Rückvermischung verringert die thermische Effizienz und führt zu einer Verbreiterung des Verweüzeitspektrums auf der Seite der längeren Verweilzeiten. Durch die so gebildeten tunnelartigen Produktdurchtritte 18, 19, 20, 21 ist es unwahrscheinlich, dass ein Granulatteilchen entgegengesetzt zur Strömungsrichtung des fluidisierten Granulats aus einer Kammer zurück in eine zu dieser Kammer stromauf liegenden Kammer wandert, da es zwischen dem Siebboden 11 und dem jeweiligen Leitblech 33, 34, 35, 36 aller Wahrscheinlichkeit nach hin und her reflektiert wird und sich in diesem Tunnel eine Zeit lang aufhalten muss, so dass es letztendlich mit grosser Wahrscheinlichkeit durch Stösse von den in der Strömungsrichtung des Granulats driftenden Granulatteilchen mitgenommen wird.

Fig. 6b zeigt eine gegenüber der ersten Ausführung von Fig. 6a verbesserte zweite Ausführung der Produktdurchtritte 18, 19, 20, 21. Der Ausschnitt von Fig. 6b entspricht dem in Fig. 6a eingekreisten Ausschnitt der ersten Ausführung der Produktdurchtritte mit dem Unterschied, dass hier im Bereich des Tunnels gegenüber von dem jeweiligen Leitblech 33, 34, 35, 36 der Siebboden 11 Löcher 11 b aufweist, die durch nur teilweises Ausstanzen von Material und Umbiegen dieses teilweise ausgestanzten Materials gebildet wurden. Durch diese Löcher 11 b wird der eingeblasenen Luft neben ihrer vertikalen Fluidisierungskomponente senkrecht zur Strömungsrichtung des Granulats eine Bewegungskomponente parallel zu und gleichgerichtet mit der Strömungsrichtung des Granulats aufgeprägt. Dadurch wird eine Rückvermischung noch unwahrscheinlicher als bei der Ausführung von Fig. 6a.

Fazit: Somit tragen die beiden Ausführungen der Produktdurchtritte 18, 19, 20, 21 der Fig. 6a und 6b zu einer weiteren Verbesserung der thermischen Effizienz und Verengung des Verweilzeitspektrums der erfindungsgemässen Vorrichtung 1 bei.

### Bezugszeichenliste

- 1: Vorrichtung
- 2: Kammer
- 3: Kammer
- 4: Kammer
- 5: Kammer
- 6: Kammer
- 7: Produkteintritt
- 8: Produktaustritt
- 9: Gaseintritt
- 10: Gasaustritt
- 11: Siebboden
- 11a: ausgestanzte Löcher mit entferntem Material
- 11b: teilausgestanzte Löcher mit umgebogenem Material
- 12: Zickzack-Abscheider
- 13: Gehäuse
- 14: Trennwand
- 15: Trennwand
- 16: Trennwand
- 17: Trennwand
- 18: Produktdurchtritt
- 19: Produktdurchtritt
- 20: Produktdurchtritt
- 21: Produktdurchtritt
- 23: Wirbelschicht
- 24: Blase
- 25: platzende Blase
- 26: Wirbelschichtoberfläche
- 28: Produktdurchtritt
- 29: Produktdurchtritt
- 30: Produktdurchtritt
- 31: Produktdurchtritt
- 33: Leitblech
- 34: Leitblech
- 35: Leitblech
- 36: Leitblech

## Patentansprüche

1. Vorrichtung (1) zum kontinuierlichen thermischen Behandeln von körnigen Schüttgütern, insbesondere zum Kristallisieren von Polymergranulat, wie z.B. Polyethylenterephthalat (PET), mit einem Produkteintritt (7), der in eine erste am weitesten stromauf gelegene Kammer (2) mündet, und einem Produktaustritt (8), der sich an eine am weitesten stromab gelegene Kammer (6) anschliesst, wobei die Vorrichtung (1) mehrere aneinandergrenzende Fluidisierungskammern (2, 3, 4, 5, 6) mit jeweils einem Siebboden (11) aufweist, durch den in die jeweilige Kammer (2, 3, 4, 5, 6) von unten her über einen Gaseintritt (9) ein Fluidisierungsgas zum Fluidisieren des Granulats einblasbar ist, das über einen Gasaustritt (10) im Deckenbereich der Vorrichtung (1) entweichen kann, wobei benachbarte Kammern jeweils über Produktdurchtritte (18, 19, 20, 21; 28, 29, 30, 31) in den zwischen ihnen angeordneten Trennwänden (14, 15, 16, 17) eine Fluidverbindung aufweisen, wobei die erste Kammer (2) einen Grossteil, insbesondere etwa die Hälfte, des Gesamtvolumens aller Kammern (2, 3, 4, 5, 6) einnimmt, und wobei zumindest ein Teil der Produktdurchtritte (18, 19, 20, 21) zwischen den benachbarten Kammern bodenseitig zwischen dem Siebboden (11) und einem unteren Endbereich der Trennwand (14, 15, 16,17) zwischen den benachbarten Kammern (2, 3, 4, 5, 6) angeordnet ist, **dadurch gekennzeichnet, dass**
a) im Deckenbereich der Vorrichtung (1) zwischen der Wirbelschichtoberfläche (26) und dem Fluidisierungsgas-Abzug ein Zickzack-Abscheider (12) angeordnet ist, und
b) die Kammern (2, 3, 4, 5, 6) nach oben hin durch diesen Zickzack-Abscheider (12) begrenzt werden, der die Kammerdecke bildet.

2. Vorrichtung nach Anspruch 1, **dadurch gekennzeichnet, dass** ein Teil der Produktdurchtritte zwischen benachbarten Kammern wandseitig zwischen einer Seitenwand und einem seitlichen Endbereich der Trennwand (14, 15, 16, 17) zwischen den benachbarten Kammern (2, 3, 4, 5, 6) angeordnet sind.

3. Vorrichtung nach Anspruch 1 oder 2, **dadurch gekennzeichnet, dass** Produktdurchtritte (28, 30) in der Trennwand (14, 16) in etwa auf der Höhe des oberen Wirbelschichtendes angeordnet sind.

4. Vorrichtung nach einem der Ansprüche 1 bis 3, **dadurch gekenntzeichnet, dass** sich die Produktdurchtritte (18, 19, 20, 21; 28, 29, 30, 31) über die gesamte Breite bzw. über die gesamte Höhe der Vorrichtung (1) von einer Seitenwand zur anderen Seitenwand bzw. vom Siebboden (11) bis zum oberen Wirbelschichtende (26) erstrecken.

5. Vorrichtung nach einem der Ansprüche 1 bis 4, **dadurch gekennzeichnet, dass** die Produktdurchtritte (18,19, 20, 21; 28, 29, 30, 31) schlitzartig ausgebildet sind.

6. Vorrichtung nach Anspruch 5, **dadurch gekennzeichnet, dass** sich die schlitzartigen Produktdurchtritte (18, 19, 20, 21; 28, 29, 30, 31) jeweils entlang der gesamten Breite bzw. entlang der gesamten Höhe einer Trennwand (14, 15, 16, 17) erstrecken.

7. Vorrichtung nach einem der vorhergehenden Ansprüche, **dadurch gekennzeichnet, dass** an entlang der Produktförderrichtung aufeinanderfolgenden Trennwänden (14, 15, 16, 17) die Produktdurchtritte (28, 29, 30, 31) abwechselnd am Siebboden (11) und auf der Höhe des oberen Wirbelschichtendes (26) angeordnet sind.

8. Vorrichtung nach einem der Ansprüche 1 bis 7, **dadurch gekennzeichnet, dass** an entlang der Produktförderrichtung aufeinanderfolgenden Trennwänden (14, 15, 16, 17) die Produktdurchtritte abwechselnd am linken wandseitigen Ende und am rechten wandseitigen Ende der Trennwand angeordnet sind.

9. Vorrichtung nach einem der vorhergehenden Ansprüche, **dadurch gekennzeichnet, dass** die Position der Produktdurchtritte (28, 30) verstellbar ist.

10. Vorrichtung nach einem der vorhergehenden Ansprüche, **dadurch gekennzeichnet, dass** die Querschnittsausdehnung der Produktdurchtritte (18, 19, 20, 21; 28, 29, 30, 31) verstellbar ist.

11. Vorrichtung nach einem der Ansprüche 7 bis 10, **dadurch gekennzeichnet, dass** eine Mindestabmessung, insbesondere die Schlitzbreite der Querschnittsausdehnung der Produktdurchtritte (18, 19, 20, 21; 28, 29. 30, 31) im Bereich zwischen einer Granulat-Mindestabmessung und etwa 20 cm liegt.

12. Vorrichtung nach Anspruch 11, **dadurch gekennzeichnet, dass** die Mindestabmessung, insbesondere die Schlitzbreite der Querschnittsausdehnung der Produktdurchtritte (18, 19, 20, 21; 28, 29, 30, 31) im Bereich zwischen dem 2-fachen einer Granulat-Mindestabmessung und etwa dem 10-fachen der Granulat-Mindestabmessung liegt.

13. Vorrichtung nach einem der vorhergehenden Ansprüche, **dadurch gekennzeichnet, dass** die bodenseitig oder die in etwa auf der Höhe des oberen Wirbelschichtendes (26) in der Trennwand bzw. die wandseitig angeordneten Produktdurchtritte (18, 19, 20, 21) jeweils ein zum Siebboden (11) bzw. zur jeweiligen Seitenwand im wesentlichen paralleles und zur Trennwand (14, 15, 16, 17) im wesentlichen jeweils senkrecht angeordnetes Leitblech (33, 34, 35, 36) aufweisen, das an der Kante des jeweiligen Produktdurchtritts (18,19, 20, 21) befestigt ist und sich durch den Produktdurchtritt hindurch beiderseits dieser Trennwand (14, 15, 16, 17) jeweils in die beiden benachbarten Kammern erstreckt.

14. Vorrichtung nach Anspruch 13, **dadurch gekennzeichnet, dass** im Bereich der bodenseitigen Produktdurchtritte im wesentlichen gegenüber von dem Leitblech (33, 34, 35, 36) Einblasbereiche im Siebboden (11) angeordnet sind, die ein Einblasen von Fluidisierungsgas in die Kammer (2, 3, 4, 5, 6) mit einer Geschwindigkeit ermöglicht, die sowohl eine Geschwindigkeitskomponente senkrecht zum Einblasbereich als auch eine Geschwindigkeitskomponente parallel zum Einblasbereich in Richtung des fluidisierten Granulatstroms ermöglicht.

15. Vorrichtung nach einem der vorhergehenden Ansprüche, **dadurch gekennzeichnet, dass** mindestens die erste Kammer (2) über ihren Siebboden (11) mit einem ihr zugeordneten Zufuhrkanal für Fluidisierungsgas verbunden ist, der von einem gemeinsamen Zufuhrkanal für die restlichen Kammern (3, 4, 5, 6) getrennt ist.

16. Vorrichtung nach einem der Ansprüche 1 bis 14, **dadurch gekennzeichnet, dass** sämtliche Kammern (2, 3. 4, 5. 6) über ihren jeweiligen Siebboden (11) einem gemeinsamen Zufuhrkanal für Fluidisierungsgas zugeordnet sind.

17. Vorrichtung nach einem der vorhergehenden Ansprüche, **dadurch gekennzeichnet, dass** sie am Produktaustritt (8) einen Prallauflöser aufweist, in den der Produktaustritt mündet.

18. Vorrichtung nach einem der vorhergehenden Ansprüche, **dadurch gekennzeichnet, dass** die Siebböden (11) aller Kammern (2, 3, 4, 5, 6) in einer Ebene angeordnet sind.

19. Vorrichtung nach einem der Ansprüche 1 bis 17, **dadurch gekennzeichnet, dass** die Siebböden der entlang des fluidisierten Granulatstroms aneinandergereihten Kammern in zueinander versetzten Höhen angeordnet sind.

20. Vorrichtung nach einem der vorhergehenden Ansprüche, **dadurch gekennzeichnet, dass** die erste Kammer (2) durch eine sie zylindrisch umgebende Wand (14) in ihrem Grundriss definiert ist und sich die restlichen Kammern (3, 4, 5, 6) um die erste Kammer (2) radial nach aussen hin mit zylindrischen Wänden konzentrisch anschliessen.

21. Vorrichtung nach einem der Ansprüche 1 bis 19, **dadurch gekennzeichnet, dass** die erste Kammer durch ein Paar konzentrischer zylindrischer Wände in ihrem Grundriss definiert ist, wobei sich die restlichen Kammern innerhalb der inneren zylindrischen Wand der ersten Kammer radial nach innen hin mit zylindrischen Wänden konzentrisch anschliessen.

22. Vorrichtung nach einem der Ansprüche 1 bis 19, **dadurch gekennzeichnet, dass** die erste Kammer in ihrem Grundriss rechteckförmig ist und sich die restlichen Kammern an die erste Kammer nach aussen hin anschliessen.

23. Vorrichtung nach einem der Ansprüche 1 bis 19, **dadurch gekennzeichnet, dass** die erste Kammer in ihrem Grundriss rechteckförmig ist und sich die restlichen Kammern innerhalb der ersten Kammer nach innen hin ineinander verschachtelt mit ebenfalls jeweils rechteckförmigem Grundriss konzentrisch anschliessen.

24. Vorrichtung nach einem der vorhergehenden Ansprüche, **dadurch gekennzeichnet, dass** die restlichen Kammern jeweils derart ausgelegt sind, dass in ihnen das Verhältnis zwischen der Schichthöhe des fluidisierten Granulats und der kleinsten Grundriss-Kammerabmessung im Bereich von 0,5 bis 2 liegt.

25. Vorrichtung nach einem der vorhergehenden Ansprüche, **dadurch gekennzeichnet, dass** die Siebbodenfläche der ersten Kammer (2) einen Grossteil der gesamten Siebbodenfläche einnimmt.

26. Vorrichtung nach Anspruch 25, **dadurch gekennzeichnet, dass** die Siebbodenfläche der ersten Kammer (2) etwa die Hälfte der gesamten Siebbodenfläche aller Kammern (2, 3, 4, 5, 6) ist.

27. Vorrichtung nach einem der vorhergehenden Ansprüche, **dadurch gekennzeichnet, dass** am stromabseitigen Ende der letzten Kammer (6) der Produktaustritt in einer Wand fensterartig (22) ausgebildet ist und ein Schieber vorgesehen ist, durch den der untere Rand des Fensters (22) verstellt werden kann.

28. Vorrichtung nach einem der Ansprüche 1 bis 26, **dadurch gekennzeichnet, dass** am stromabseitigen Ende der letzten Kammer (6) der Produktaustritt als eine Art schwenkbares Wehr ausgebildet, dessen Höhe durch Schwenken des Wehres verstellt werden kann.

29. Verfahren unter Verwendung der Vorrichtung nach einem der Ansprüche 1 bis 28 zum kontinuierlichen thermischen Behandeln eines körnigen Schüttgutes, insbesondere zum Kristallisieren von Polymergranulat, wie z.B. Polyethylenterephthalat (PET) wobei das Granulat durch die mehreren aneinandergereihten Fluidisierungskammern geführt wird, die jeweils einen Siebboden aufweisen, durch den in die jeweilige Kammer von unten her ein Fluidisierungsgas zum Fluidisieren des Granulats eingeblasen und im Deckenbereich der Vorrichtung abgezogen wird, wobei die absolute Füllhöhe des fluidisierten Granulates in der ersten Kammer mindestens so hoch wie die absolute Füllhöhe der sich stromab anschliessenden restlichen Kammern ist, **dadurch gekennzeichnet, dass**
➢ in die erste Kammer Fluidisierungsgas mit höherem Druck und/oder höherer Gasgeschwindigkeit als in die restlichen Kammern eingeblasen wird und
➢ das Fluidisierungsgas im Deckenbereich der Vorrichtung über den Zickzack-Abscheider abgezogen wird, der das Fluidisierungsgas durchlässt und die Granulatteilchen aufhält.

30. Verfahren nach Anspruch 29, **dadurch gekennzeichnet, dass** in sämtliche Kammern Fluidisierungsgas mit einer einheitlichen ersten Behandlungstemperatur eingeblasen.wird.

31. Verfahren nach Anspruch 30, **dadurch gekennzeichnet, dass** das Fluidisierungsgas als Wärmequelle zum Aufheizen des fluidisierten Granulats verwendet wird.

32. Verfahren nach einem der Ansprüche 29 bis 31, **dadurch gekennzeichnet, dass** das Fluidisierungsgas zumindest teilweise ein mit dem fluidisierten Granulat reagierendes Gas enthält.

33. Verfahren nach einem der Ansprüche 29 bis 32, **dadurch gekennzeichnet, dass** in mindestens eine der restlichen Kammern ein Fluidisierungsgas mit einer zweiten Behandlungstemperatur eingeblasen wird.

34. Verfahren nach Anspruch 33, **dadurch gekennzeichnet, dass** das Fluidisierungsgas als Wärmesenke zum Kühlen des fluidisierten Granulats verwendet wird.

## Claims

1. Device (1) for the continuous thermal treatment of granular bulk materials, in particular for crystallizing polymer granules, such as, for example, polyethylene terephthalate (PET), having a product inlet (7) which opens into a first chamber (2) situated furthest upstream, and a product outlet (8) which adjoins a chamber (6) situated furthest downstream, wherein the device (1) has a plurality of adjoining fluidizing chambers (2, 3, 4, 5, 6) with a respective sieve bottom (11) through which a fluidizing gas for fluidizing the granules can be injected into the respective chamber (2, 3, 4, 5, 6) from below via a gas inlet (9), which fluidizing gas can escape via a gas outlet (10) in the cover region of the device (1), wherein adjacent chambers each have a fluid connection via product passages (18, 19, 20, 21; 28, 29, 30, 31) in the divide walls (14, 15, 16, 17) arranged between them, wherein the first chamber (2) occupies a large part, in particular approximately half, of the total volume of all chambers (2, 3, 4, 5, 6), and wherein at least a part of the product passages (18, 19, 20, 21) between the adjacent chambers is arranged on the bottom side between the sieve bottom (11) and a lower end region of the dividing wall (14, 15, 16, 17) between the adjacent chambers (2, 3, 4, 5, 6), **characterized in that**
a) a zigzag separator (12) is arranged in the cover region of the device (1) between the fluidized bed surface (26) and the fluidizing gas take-off, and
b) the chambers (2, 3, 4, 5, 6) are bounded upwardly by this zigzag separator (12) which forms the chamber cover.

2. Device according to Claim 1, **characterized in that** a part of the product passages between adjacent chambers is arranged on the wall side between a side wall and a lateral end region of the dividing wall (14, 15, 16, 17) between the adjacent chambers (2, 3, 4, 5, 6).

3. Device according to Claim 1 or 2, **characterized in that** product passages (28, 30) are arranged in the dividing wall (14, 16) approximately at the height of the upper fluidized bed end.

4. Device according to one of Claims 1 to 3, **characterized in that** the product passages (18, 19, 20, 21; 28, 29, 30, 31) extend over the entire width or over the entire height of the device (1) from one side wall to the other side wall or from the sieve bottom (11) to the upper fluidized bed end (26).

5. Device according to one of Claims 1 to 4, **characterized in that** the product passages (18, 19, 20, 21; 28, 29, 30, 31) have a slot-like design.

6. Device according to Claim 5, **characterized in that** the slot-like product passages (18, 19, 20, 21; 28, 29, 30, 31) each extend along the entire width or along the entire height of a dividing wall (14, 15, 16, 17).

7. Device according to one of the preceding claims, **characterized in that** the product passages (28, 29, 30, 31) are arranged alternately on the sieve bottom (11) and at the height of the upper fluidized bed end (26) on dividing walls (14, 15, 16, 17) which follow one another along the product conveying direction.

8. Device according to one of Claims 1 to 7, **characterized in that** the product passages are arranged alternately on the left wall-side end and on the right wall-side end of the dividing wall on dividing walls (14, 15, 16, 17) which follow one another along the product conveying direction.

9. Device according to one of the preceding claims, **characterized in that** the position of the product passages (28, 30) is adjustable.

10. Device according to one of the preceding claims, **characterized in that** the cross-sectional extent of the product passages (18, 19, 20, 21; 28, 29, 30, 31) is adjustable.

11. Device according to one of Claims 7 to 10, **characterized in that** a minimum dimension, in particular the slot width of the cross-sectional extent of the product passages (18, 19, 20, 21; 28, 29, 30, 31), lies in the range between a minimum dimension of the granules and approximately 20 cm.

12. Device according to Claim 11, **characterized in that** the minimum dimension, in particular the slot width of the cross-sectional extent of the product passages (18, 19, 20, 21; 28, 29, 30, 31), lies in the range between twice a minimum dimension of the granules and approximately 10 times the minimum dimension of the granules.

13. Device according to one of the preceding claims, **characterized in that** the product passages (18, 19, 20, 21) arranged on the bottom side or the product passages arranged approximately at the height of the upper fluidized bed end (26) in the dividing wall or the product passages arranged on the wall side each have a baffle (33, 34, 35, 36) which is arranged substantially parallel to the sieve bottom (11) or to the respective side wall and substantially in each case perpendicular to the dividing wall (14, 15, 16, 17), which baffle is fastened to the edge of the respective product passage (18, 19, 20, 21) and extends through the product passage on both sides of this dividing wall (14, 15, 16, 17) in each case into the two adjacent chambers.

14. Device according to Claim 13, **characterized in that** injection regions are arranged in the sieve bottom (11) in the region of the bottom-side product passages substantially opposite the baffle (33, 34, 35, 36), which injection regions allow fluidizing gas to be injected into the chamber (2, 3, 4, 5, 6) with a velocity which allows a velocity component perpendicular to the injection region and a velocity component parallel to the injection region in the direction of the fluidized stream of granules.

15. Device according to one of the preceding claims, **characterized in that** at least the first chamber (2) is connected via its sieve bottom (11) to an associated supply channel for fluidizing gas, which supply channel is separate from a common supply channel for the remaining chambers (3, 4, 5, 6).

16. Device according to one of Claims 1 to 14, **characterized in that** all the chambers (2, 3, 4, 5, 6) are assigned a common supply channel for fluidizing gas via their respective sieve bottom (11).

17. Device according to one of the preceding claims, **characterized in that** it has, at the product outlet (8), an impact disintegrator into which the product outlet opens.

18. Device according to one of the preceding claims, **characterized in that** the sieve bottoms (11) of all the chambers (2, 3, 4, 5, 6) are arranged in one plane.

19. Device according to one of Claims 1 to 17, **characterized in that** the sieve bottoms of the chambers positioned in a row along the fluidized stream of granules are arranged at mutually offset heights.

20. Device according to one of the preceding claims, **characterized in that** the first chamber (2) is defined in its outline by a wall (14) which surrounds it cylindrically, and the remaining chambers (3, 4, 5, 6) adjoin concentrically about the first chamber (2) radially outwardly with cylindrical walls.

21. Device according to one of Claims 1 to 19, **characterized in that** the first chamber is defined in its outline by a pair of concentric cylindrical walls, wherein the remaining chambers adjoin one another concentrically within the inner cylindrical wall of the first chamber radially inwardly with cylindrical walls.

22. Device according to one of Claims 1 to 19, **characterized in that** the first chamber is rectangular in its outline and the remaining chambers adjoin the first chamber outwardly.

23. Device according to one of Claims 1 to 19, **characterized in that** the first chamber is rectangular in its outline and the remaining chambers adjoin one another concentrically inwardly within the first chamber, nested inside one another, with likewise a rectangular outline in each case.

24. Device according to one of the preceding claims, **characterized in that** the remaining chambers are each designed in such a way that in them the ratio between the bed height of the fluidized granules and the smallest outline chamber dimension lies in the range of 0.5 to 2.

25. Device according to one of the preceding claims, **characterized in that** the sieve bottom area of the first chamber (2) occupies a large part of the total sieve bottom area.

26. Device according to Claim 25, **characterized in that** the sieve bottom area of the first chamber (2) is approximately half the total sieve bottom area of all the chambers (2, 3, 4, 5, 6).

27. Device according to one of the preceding claims, **characterized in that**, at the downstream end of the last chamber (6), the product outlet is formed in a wall in a window-like manner (22) and a slide is provided by means of which the lower edge of the window (22) can be adjusted.

28. Device according to one of Claims 1 to 26, **characterized in that**, at the downstream end of the last chamber (6), the product outlet is designed as a type of pivotable weir whose height can be adjusted by pivoting the weir.

29. Method using the device according to one of Claims 1 to 28 for the continuous thermal treatment of a granular bulk material, in particular for crystallizing polymer granules, such as, for example, polyethylene terephthalate (PET), wherein the granules are guided through the plurality of fluidizing chambers which are positioned in a row and which each have a sieve bottom through which a fluidizing gas for fluidizing the granules is injected into the respective chamber from below and is taken off in the cover region of the device, wherein the absolute fill height of the fluidized granules in the first chamber is at least as high as the absolute fill height of the remaining chambers which adjoin downstream, **characterized in that**
➢ fluidizing gas is injected into the first chamber at a higher pressure and/or higher gas velocity than in the remaining chambers and
➢ the fluidizing gas is taken off in the cover region of the device via the zigzag separator which lets through the fluidizing gas and retains the granular particles.

30. Method according to Claim 29, **characterized in that** fluidizing gas is injected with a uniform first treatment temperature into all the chambers.

31. Method according to Claim 30, **characterized in that** the fluidizing gas is used as a heat source for heating the fluidized granules.

32. Method according to one of Claims 29 to 31, **characterized in that** the fluidizing gas at least partially contains a gas reacting with the fluidized granules.

33. Method according to one of Claims 29 to 32, **characterized in that** a fluidizing gas is injected with a second treatment temperature into at least one of the remaining chambers.

34. Method according to Claim 33, **characterized in that** the fluidizing gas is used as a heat sink for cooling the fluidized granules.

## Revendications

1. Dispositif (1) pour le traitement thermique continu de produits granuleux en vrac, en particulier pour la cristallisation d'un granulat de polymère, tel que par exemple du polyéthylène téréphtalate (PET), avec une entrée de produit (7) débouchant sur une première chambre (2) située le plus en amont, et une sortie de produit (8) se raccordant à une chambre (6) située le plus en aval, le dispositif (1) comportant plusieurs chambres de fluidification (2, 3, 4, 5, 6) consécutives, chacune avec un plateau perforé (11), par lequel un gaz fluidifiant peut être soufflé par le bas dans chacune des chambres (2, 3, 4, 5, 6) par une entrée de gaz (9), pour la fluidification du granulat, et le gaz pouvant s'échapper par une sortie de gaz (10) dans la région de plafond du dispositif (1), les chambres voisines comportant à chaque fois une liaison fluidique par des passages de produit (18, 19, 20, 21 ; 28, 29, 30, 31) dans les cloisons (14, 15, 16, 17) disposées entre elles, la première chambre (2) admettant une majeure partie, en particulier environ la moitié, du volume total de toutes les chambres (2, 3, 4, 5, 6), et au moins une partie des passages de produit (18, 19, 20, 21) entre les chambres voisines étant agencée côté fond entre le plateau perforé (11) et une région terminale inférieure de la cloison (14, 15, 16, 17) entre les chambres voisines (2, 3, 4, 5, 6), **caractérisé en ce que**
a) dans la région de plafond du dispositif (1), entre la surface de lit fluidisé (26) et l'évacuation de gaz fluidifiant, un séparateur en zigzag (12) est agencé, et
b) les chambres (2, 3, 4, 5, 6) sont limitées vers le haut par ce séparateur en zigzag (12) formant le plafond de chambre.

2. Dispositif selon la revendication 1, **caractérisé en ce qu'**une partie des passages de produit entre les chambres voisines sont agencés côté paroi entre une paroi latérale et une région terminale latérale de la cloison (14, 15, 16, 17) entre les chambres voisines (2, 3, 4, 5, 6).

3. Dispositif selon la revendication 1 ou 2, **caractérisé en ce que** les passages de produit (28, 30) dans la cloison (14, 16) sont agencés à peu près à la hauteur de l'extrémité supérieure du lit fluidisé.

4. Dispositif selon l'une des revendications 1 à 3, **caractérisé en ce que** les passages de produit (18, 19, 20, 21 ; 28, 29, 30, 31) s'étendent sur toute la largeur ou sur toute la hauteur du dispositif (1), d'une paroi latérale vers l'autre paroi latérale ou du plateau perforé (11) jusqu'à l'extrémité supérieure du lit fluidisé (26).

5. Dispositif selon l'une des revendications 1 à 4, **caractérisé en ce que** les passages de produit (18, 19, 20, 21 ; 28, 29, 30, 31) sont formés comme des fentes.

6. Dispositif selon la revendication 5, **caractérisé en ce que** les passages de produit (18, 19, 20, 21 ; 28, 29, 30, 31) s'étendent chacun le long de toute la largeur ou le long de toute la hauteur d'une cloison (14, 15, 16, 17).

7. Dispositif selon l'une des revendications précédentes, **caractérisé en ce que** sur des cloisons consécutives (14, 15, 16, 17) le long de la direction de transport du produit, les passages de produit (28, 29, 30, 31) sont agencés alternativement sur le plateau perforé (11) et à la hauteur de l'extrémité supérieure du lit fluidisé (26).

8. Dispositif selon l'une des revendications 1 à 7, **caractérisé en ce que** sur des cloisons consécutives (14, 15, 16, 17) le long de la direction de transport du produit, les passages de produit sont agencés alternativement à l'extrémité côté paroi de gauche et à l'extrémité côté paroi de droite de la cloison.

9. Dispositif selon l'une des revendications précédentes, **caractérisé en ce que** la position des passages de produit (28, 30) est réglable.

10. Dispositif selon l'une des revendications précédentes, **caractérisé en ce que** la taille de section transversale des passages de produit (18, 19, 20, 21 ; 28, 29, 30, 31) est réglable.

11. Dispositif selon l'une des revendications 7 à 10, **caractérisé en ce qu'**une taille minimale, en particulier la largeur de fente de la taille de section transversale des passages de produit (18, 19, 20, 21 ; 28, 29, 30, 31) est comprise entre une taille minimale de granulat et environ 20 cm.

12. Dispositif selon la revendication 11, **caractérisé en ce que** la taille minimale, en particulier la largeur de fente de la taille de section transversale des passages de produit (18, 19, 20, 21 ; 28, 29, 30, 31) est comprise entre 2 fois une taille minimale du granulat et environ 10 fois la taille minimale du granulat.

13. Dispositif selon l'une des revendications précédentes, **caractérisé en ce que** les passages de produit (18, 19, 20, 21) agencés côté fond ou à peu près à la hauteur de l'extrémité supérieure du lit fluidisé (26) dans la cloison ou côté paroi comportent chacun une tôle de guidage (33, 34, 35, 36) disposée à chaque fois essentiellement verticalement par rapport à la cloison (14, 15, 16, 17) et essentiellement parallèlement par rapport au plateau perforé (11) ou à chacune des parois latérales, laquelle tôle de guidage est fixée au bord de chacun des passages de produit (18, 19, 20, 21) et s'étend à travers le passage de produit des deux côtés de cette cloison (14, 15, 16, 17), respectivement dans les deux chambres voisines.

14. Dispositif selon la revendication 13, **caractérisé en ce que** dans la région des passages de produit côté fond, essentiellement en face de la tôle de guidage (33, 34, 35, 36), des régions d'injection sont agencées dans le plateau perforé (11), permettant une injection du gaz fluidifiant dans la chambre (2, 3, 4, 5, 6), avec une vitesse permettant aussi bien une composante de vitesse perpendiculaire à la région d'injection, qu'une composante de vitesse parallèle à la région d'injection, dans la direction du flux de granulat fluidisé.

15. Dispositif selon l'une des revendications précédentes, **caractérisé en ce qu'**au moins la première chambre (2) est reliée par son plateau perforé (11) à un canal d'alimentation pour gaz fluidifiant, qui lui est attribué et qui est séparé d'un canal d'alimentation commun pour les autres chambres (3, 4, 5, 6).

16. Dispositif selon l'une des revendications 1 à 14, **caractérisé en ce que** toutes les chambres (2, 3, 4, 5, 6) sont attribuées par leur plateau perforé (11) respectif à un canal d'alimentation commun pour gaz fluidifiant.

17. Dispositif selon l'une des revendications précédentes, **caractérisé en ce qu'**il comporte un amortisseur de choc sur la sortie de produit (8), dans lequel débouche la sortie de produit.

18. Dispositif selon l'une des revendications précédentes, **caractérisé en ce que** les plateaux perforés (11) de toutes les chambres (2, 3, 4, 5, 6) sont disposées dans un plan.

19. Dispositif selon l'une des revendications 1 à 17, **caractérisé en ce que** les plateaux perforés des chambres juxtaposées le long du flux de granulat fluidisé sont disposés à des hauteurs décalées les unes par rapport aux autres.

20. Dispositif selon l'une des revendications précédentes, **caractérisé en ce que** la première chambre (2) est définie dans son contour par une paroi (14) qui l'encercle de façon cylindrique, et **en ce que** les autres chambres (3, 4, 5, 6) se raccordent concentriquement autour de la première chambre (2), radialement vers l'extérieur, avec des parois cylindriques.

21. Dispositif selon l'une des revendications 1 à 19, **caractérisé en ce que** la première chambre est définie dans son contour par quelques parois cylindriques concentriques, les autres chambres se raccordant concentriquement à l'intérieur de la paroi intérieure cylindrique de la première chambre, radialement vers l'extérieur, avec des parois cylindriques.

22. Dispositif selon l'une des revendications 1 à 19, **caractérisé en ce que** la première chambre est rectangulaire dans son contour et **en ce que** les autres chambres se raccordent vers l'extérieur à la première chambre.

23. Dispositif selon l'une des revendications 1 à 19, **caractérisé en ce que** la première chambre est rectangulaire dans son contour, et **en ce que** les autres chambres se raccordent concentriquement à l'intérieur de la première chambre, en s'emboîtant les unes dans les autres vers l'intérieur, également avec un contour rectangulaire à chaque fois.

24. Dispositif selon l'une des revendications précédentes, **caractérisé en ce que** les autres chambres sont conçues de telle manière qu'en leur intérieur, le rapport entre le niveau de lit du granulat fluidisé et la plus petite taille de contour de chambre est compris entre 0,5 et 2.

25. Dispositif selon l'une des revendications précédentes, **caractérisé en ce que** la surface du plateau perforé de la première chambre (2) occupe une grande partie de la surface totale du plateau perforé.

26. Dispositif selon la revendication 25, **caractérisé en ce que** la surface du plateau perforé de la première chambre (2) équivaut à environ la moitié de la surface totale des plateaux perforés de toutes les chambres (2, 3, 4, 5, 6).

27. Dispositif selon l'une des revendications précédentes, **caractérisé en ce qu'**à l'extrémité côté aval de la dernière chambre (6), la sortie de produit est formée comme une fenêtre (22) dans une paroi, et **en ce qu'**il est prévu un poussoir permettant d'ajuster le bord inférieur de la fenêtre (22).

28. Dispositif selon l'une des revendications 1 à 26, **caractérisé en ce qu'**à l'extrémité côté aval de la dernière chambre (6), la sortie de produit est formée comme un déversoir pivotant, dont la hauteur est réglable en faisant pivoter le déversoir.

29. Procédé utilisant le dispositif selon l'une des revendications 1 à 28, pour le traitement thermique continu d'un produit granuleux en vrac, en particulier pour la cristallisation d'un granulat de polymère, tel que par exemple du polyéthylène téréphtalate (PET), le granulat étant guidé à travers les plusieurs chambres de fluidification juxtaposées, comportant chacune un plateau perforé, par lequel un gaz fluidifiant peut être soufflé par le bas dans chacune des chambres, pour la fluidification du granulat, pour ensuite s'échapper dans la région de plafond du dispositif, le niveau de remplissage absolu du granulat fluidifié dans la première chambre étant au moins aussi élevé que le niveau de remplissage absolu des autres chambres qui suivent en aval, **caractérisé en ce que**
- dans la première chambre, du gaz fluidifiant est injecté avec une pression plus élevée et/ou une vitesse de gaz plus élevée que dans les autres chambres et
- dans la région de plafond du dispositif, le gaz fluidifiant est séparé par le séparateur en zigzag qui laisse passer le gaz fluidifiant et retient les particules de granulat.

30. Procédé selon la revendication 29, **caractérisé en ce que** dans toutes les chambres, le gaz fluidifiant est injecté avec une première température de traitement homogène.

31. Procédé selon la revendication 30, **caractérisé en ce que** le gaz fluidifiant est utilisé comme source de chaleur pour le chauffage du granulat fluidifié.

32. Procédé selon l'une des revendications 29 à 31, **caractérisé en ce que** le gaz fluidifiant contient au moins partiellement un gaz réagissant avec le granulat fluidifié.

33. Procédé selon l'une des revendications 29 à 32, **caractérisé en ce que** dans au moins l'une des autres chambres, un gaz fluidifiant est injecté avec une deuxième température de traitement.

34. Procédé selon la revendication 33, **caractérisé en ce que** le gaz fluidifiant est utilisé comme dissipateur thermique pour le refroidissement du granulat fluidifié.
